# EUROPEAN PATENT APPLICATION

(11) **EP 2 133 151 A1**
(43) Date of publication of application: **16.12.2009**
(21) Application number: 09162222.5
(22) Date of filing: 09.06.2009
(51) Int. Cl.: B01L 3/00, G01N 21/62, G01N 35/02

(54) **Analyzing apparatus using rotatable microfluidic disk**

(30) Priority: 11.06.2008 KR 20080054866
(71) Applicant: Samsung Electronics Co., Ltd., Suwon-si Gyeonggi-do 443-742 (KR)
(72) Inventor: Hwang, Induk, 449-712, Gyeonggi-do (KR); Lee, Jeonggun, 449-712, Gyeonggi-do (KR)
(74) Representative: Grünecker, Kinkeldey, Stockmair & Schwanhäusser Anwaltssozietät

(57) **Abstract**

Provided is an analyzing apparatus which can improve an efficiency of detecting light generated from reaction chambers in a microfluidic disk and reduce the occurrence of crosstalk between neighboring reaction chambers. The analyzing apparatus includes: a rotatable disk in which a plurality of reaction chambers where samples and reagents react with each other are formed; a rotation driver rotating the disk; and a photodetector unit detecting light generated from the reaction chambers, and the photodetector unit comprises: a photodetecting device receiving the light to generate electrical signals; and a light transmitting element receiving the light generated from the reaction chambers and transferring the received light to the photodetecting device.

## Description

### BACKGROUND OF THE INVENTION

### 1. Field of the Invention

Apparatuses consistent with the present invention use a rotatable microfluidic disk, and more particularly, the apparatuses are capable of improving an efficiency of detecting light generated from reaction chambers in a microfluidic disk and reducing crosstalk between neighboring reaction chambers.

### 2. Description of the Related Art

While various methods of analyzing samples in various fields such as environmental monitoring, food testing, and medical diagnosis have been developed, analyzing methods in a related art require a lot of manual operations and various kinds of equipment. A skilled technician should perform multiple manual operations, for example, several reagent injections, mixing, separating and moving, reaction, and centrifugation, in order to perform a test according to a predetermined protocol; however, such test method may cause an error in a test result.

In order to execute a test rapidly and precisely, a skilled clinicopatholgist must execute the test. However, even a skilled clinicopathologist may have difficulty in performing various tests at the same time. It is important to obtain test results rapidly in order to treat patients in emergency situations. Therefore, equipment that can execute various pathological tests rapidly and precisely at the same time is required.

For a pathological test in a related art, large and expensive automated equipment is required, and thus, a large amount of test material, such as, blood, is required. In addition, it takes a long time to execute the test, that is, it may take two days to two weeks to obtain test results.

In order to solve the above problems, small automated equipment, which can rapidly analyze test material sampled from one or a few patients, has been developed. For example, when blood is loaded into a microfluidic disk and the microfluidic disk is rotated, blood serum is separated due to the centrifugal force. The separated blood serum is mixed with a predetermined diluted liquid, and then the mixture is moved to a plurality of reaction chambers in the microfluidic disk. Antibodies, which react with the material to be measured, exist in the reaction chambers, and when chemiluminescence material is induced to react with the material, light is generated. A concentration of the target material can be measured by detecting changes in an optical intensity of the light.

In an analyzing apparatus using such a rotatable microfluidic disk, there is a gap between the disk, in which a plurality of reaction chambers exist, and a photodetector unit. Therefore, there may occur light loss in the photodetector unit and crosstalk between adjacent chambers may occur.

### SUMMARY OF THE INVENTION

The present invention provides an analyzing apparatus using a rotatable microfluidic disk, which may improve efficiency in detecting light generated from reaction chambers of the microfluidic disk and reduce the crosstalk between adjacent chambers.

According to an aspect of the present invention, there is provided an analyzing apparatus including: a rotatable disk, in which a plurality of reaction chambers where a sample is brought to contact with a reagent are formed; a rotation driver rotating the disk; and a photodetector unit detecting light generated from the reaction chambers, wherein the photodetector unit includes: a photodetecting device receiving the light to generate electrical signals; and a light transmitting element receiving the light generated from the reaction chambers and transferring the received light to the photodetecting device.

The photodetecting device may be disposed to face a surface of the disk in which the reaction chambers are formed, and the light transmitting element may be disposed between the photodetecting device and the disk.

The light transmitting element may be a transparent bar type optical device.

The light transmitting element may have a cylindrical shape.

The light transmitting element may include a light incident surface facing the disk and a light exiting surface facing the photodetecting device, and the light incident on the light incident surface may travel in the light transmitting element through total internal reflection and is output through the light exiting surface.

At least one of the light incident surface and the light exiting surface of the light transmitting element may be a planar surface.

The light incident surface of the light transmitting element may have a convex lens shape.

The light exiting surface of the light transmitting element may have a convex lens shape.

The analyzing apparatus may further include an anti-reflection coating formed on at least one of the light incident surface and the light exiting surface of the light transmitting element.

The light transmitting element may be disposed such that the distance between the light incident surface of the light transmitting element and the disk may be equal to or greater than the amount of tilt generated when the disk rotates.

The light transmitting element may be disposed such that a predetermined distance exists between the light exiting surface of the light transmitting element and a surface of the photodetecting device.

A cross-sectional shape of the light transmitting element may be the same as a cross-sectional shape of the photodetecting device.

The photodetector unit may further include a main body, on which the photodetecting device is mounted, and the light transmitting element may be fixed on a surface of the main body.

The photodetector unit may further include: a supporting member surrounding the light transmitting element to fix the light transmitting element onto the surface of the main body.

The light incident surface of the light transmitting element may be located inside the supporting member that surrounds the light transmitting element.

### BRIEF DESCRIPTION OF THE DRAWINGS

The above and other aspects of the present invention will become more apparent by describing in detail exemplary embodiments thereof with reference to the attached drawings, in which:

FIG. 1 is a schematic perspective view illustrating an analyzing apparatus using a rotatable microfluidic disk, according to an exemplary embodiment of the present invention;

FIG. 2 is a cross-sectional view of the analyzing apparatus using the rotatable microfluidic disk of FIG. 1, according to an exemplary embodiment of the present invention;

FIGS. 3A through 3C are cross-sectional views of examples of a light transmitting element illustrated in FIGS. 1 and 2, according to exemplary embodiments of the present invention; and

FIG. 4 is a cross-sectional view for explaining an operation of the analyzing apparatus using the rotatable microfluidic disk of FIG. 1, according to an exemplary embodiment of the present invention.

### DETAILED DESCRIPTION OF EXEMPLARY EMBODIMENTS

Hereinafter, a structure and operations of an analyzing apparatus using a rotatable microfluidic disk according to exemplary embodiments of the present invention will be described in detail with reference to the accompanying drawings.

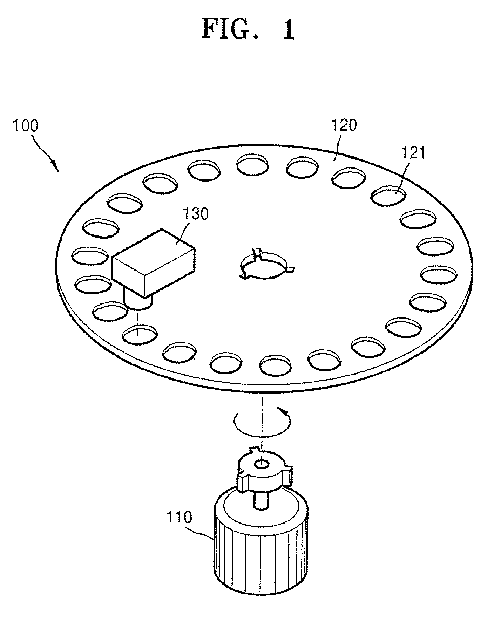

FIG. 1 is a schematic perspective view of an analyzing apparatus 100 using a rotatable microfluidic disk, according to an exemplary embodiment of the present invention. Referring to FIG. 1, the analyzing apparatus 100 according to the exemplary embodiment of the present invention includes a rotatable disk 120 having a plurality of reaction chambers 121, in which reagents and samples react with each other, a rotation driver 110 for rotating the disk 120, and a photodetector unit 130 detecting light generated from the reaction chambers 121.

Here, the rotation driver 110 may include a motor drive apparatus that can control an angular position of the disk 120. The motor drive apparatus may use, for example, a step motor or a direct current (DC) motor.

The plurality of reaction chambers 121 are disposed in an upper surface of the disk 120 at a same distance from the center portion of the disk 120 and separated by constant intervals from each other. Different reagents are respectively injected in advance into the reaction chambers 121 according to test items. The reagents injected into the reaction chambers 121 react with certain materials included in a sample, and as a result, light is generated. The reaction material and light emission characteristics may vary according to the type of reagent. Although only reaction chambers 121 are illustrated in FIG. 1, a sample chamber into which a sample such as blood is loaded, a reagent chamber in which another reagents, such as a diluted solution, to be mixed with the sample are reserved, a plurality of channels connecting the above chambers, and a valve controlling fluid flowing through the channels may be further disposed on the center portion of the disk 120. In this structure, when the disk 120 rotates at high speed, the sample in the sample chamber flows to an outer portion of the disk 120 along the channels, and then is mixed with reagents to be induced into the reaction chambers 121. Structures of the chambers and channels of the disk 120 are well known in the art, and thus, detailed descriptions thereof are not provided here.

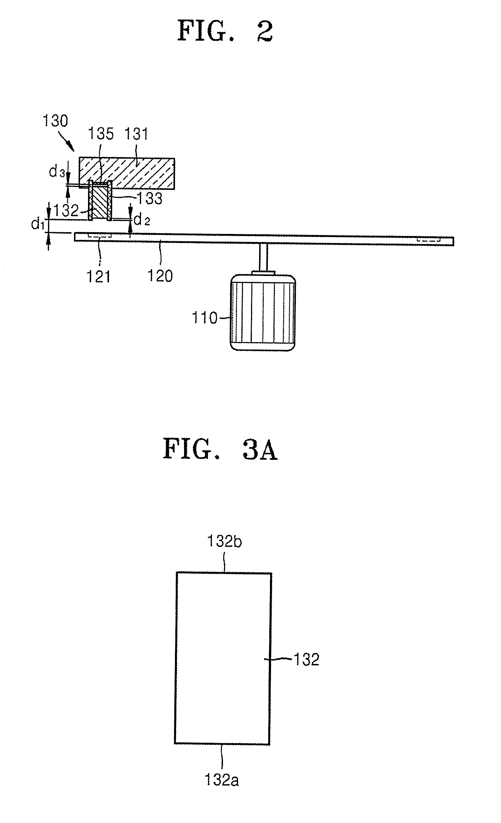

The photodetector unit 130 is disposed to face the upper surface of the disk 120, in which the reaction chambers 121 are formed. In particular, the photodetector unit 130 is disposed to face the reaction chambers 121 in the disk 120. A detailed structure of the photodetector unit 130 is illustrated in FIG. 2.

FIG. 2 is a cross-sectional view of the analyzing apparatus 100 using the rotatable disk 120, according to an exemplary embodiment of the present invention. Referring to FIG. 2, the photodetector unit 130 includes a main body 131, a photodetecting device 135 mounted on the main body 131 to receive light and generate electrical signals, and a light transmitting element 132 receiving the light generated by the reaction chambers 121 and transferring the received light to the photodetecting device 135.

Electronic circuits for amplifying and analyzing electrical signals generated by the photodetecting device 135 may be arranged in the main body 131. The photodetecting device 135 is disposed to face the upper surface of the disk 120, in which the reaction chambers 121 are formed. The photodetecting device 135 may be a photomultiplier (PMT) or a photodiode. Otherwise, the photodetecting device 135 may include an array of a plurality of PMTs or a plurality of photodiodes, and may include an area imaging device such as a charge coupled device (CCD).

The light transmitting element 132 is disposed between the photodetecting device 135 and the disk 120 as illustrated in FIG. 2. The light transmitting element 132 transfers the light generated by the reaction chambers 121 of the disk 120 to the photodetecting device 135 without any optical loss. To do this, the light transmitting element 132 may be a transparent bar-type optical device. For example, the light transmitting element 132 can be formed of a high-refraction optical glass such as BK-7 by forming the optical glass in a cylinder shape. A plastic material having excellent light transmittance such as polymethyl methacrylate (PMMA) formed in a cylinder shape also can be used as the light transmitting element 132. However, the light transmitting element 132 is not limited to having a circular cross section. The lateral section of the light transmitting element 132 may be the same as the cross-sectional shape of the photodetecting device 135.

FIGS. 3A through 3C are cross-sectional views illustrating examples of the light transmitting element 132. Referring to FIGS. 3A through 3C, the light transmitting element 132 includes a light incident surface 132a facing the disk 120 and a light exiting surface 132b facing the photodetecting device 135. The light incident on the light incident surface 132a of the light transmitting element 132 travels in the light transmitting element 132 through total internal reflection, and after that, can be output through the light exiting surface 132b of the light transmitting element 132. After that, the light is incident to the photodetecting device 135 facing the light exiting surface 132b. Therefore, the light incident on the light incident surface 132a of the light transmitting element 132 can be transferred to the photodetecting device 135 without loss.

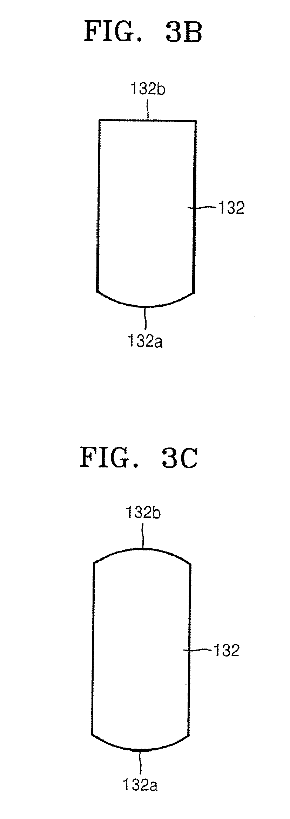

Referring to FIG. 3A, both the light incident surface 132a and the light exiting surface 132b of the light transmitting element 132 may be flat surfaces. Alternatively, referring to FIG. 3B, the light incident surface 132a of the light transmitting element 132, which faces the disk 120, may have a convex lens shape, and the light exiting surface 132b facing the photodetecting device 135 can be a planar surface. As another example , referring to FIG. 3C, both the light incident surface 132a and the light exiting surface 132b of the light transmitting element 132 may have convex lens shapes. When the light incident surface 132a or the light exiting surface 132b is formed as a convex lens as shown in FIG. 3B or FIG. 3C, a beam diameter of the light incident on the photodetecting device 135 can be reduced, and an energy concentration of the light can be increased to improve the photodetecting efficiency. In particular, the examples illustrated in FIG. 3B or FIG. 3C are effective when the area of the photodetecting device 135 is equal to the cross-sectional area of the light transmitting element 132 or smaller. In addition, although not shown in the drawings, an anti-reflection material can be coated on at least one of the light incident surface 132a or the light exiting surface 132b of the light transmitting element 132, and thus, loss of light caused by reflection on the light incident surface 132a or the light exiting surface 132b can be minimized.

Referring to FIG. 2, the light transmitting element 132 may be fixed on a surface of the main body 131 of the photodetector unit 130. For example, the light transmitting element 132 can be fixed on the main body 131 by a supporting member 133 surrounding the light transmitting element 132. The supporting member 133 surrounds an outer circumferential surface of the light transmitting element 132, and is fixed on the surface of the main body 131 by a device such as a screw.

Here, the light transmitting element 132 may be disposed such that a predetermined distance d3 exists between the light exiting surface 132b of the light transmitting element 132 and the surface of the photodetecting device 135. If the light exiting surface 132b of the light transmitting element 132 directly contacts the photodetecting device 135, the photodetecting device 135 may be damaged. In addition, although it is advantageous that the light incident surface 132a of the light transmitting element 132 and the disk 120 are close to each other, the light transmitting element 132 may be disposed such that a predetermined distance d1 exists between the light incident surface 132a of the light transmitting element 132 and the disk 120. If the light incident surface 132a of the light transmitting element 132 is too close to the disk 120, the light transmitting element 132 may collide with the disk 120 due to tilting of the disk 120 when the disk 120 rotates. The distance d1 between the light incident surface 132a of the light transmitting element 132 and the disk 120 may be equal to or greater than the amount of tilt generated when the disk 120 rotates. In addition, in order to protect the light incident surface 132a of the light transmitting element 132, the light incident surface 132a of the light transmitting element 132 may be located at a position separated by a predetermined distance d2 from an end portion of the supporting member 133, which surrounds the light transmitting element 132. In this case, the distance d1 can be defined as a distance between the end portion of the supporting member 133 and the disk 120, rather than the distance between the light incident surface 132a of the light transmitting element 132 and the disk 120.

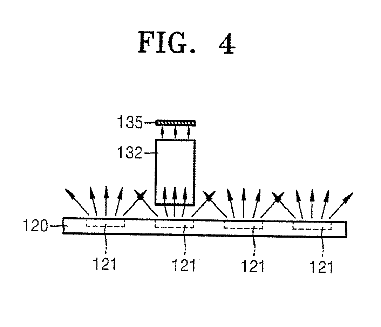

FIG. 4 is a cross-sectional view for explaining an operation of the analyzing apparatus 100 using the rotatable microfluidic disk of FIG. 1, according to an exemplary embodiment of the present invention.. While the disk 120 rotates, the reaction chambers 121, which emit light due to the reaction between the samples and reagents, pass under the light transmitting element 132. At this time, since the light incident surface 132a of the light transmitting element 132 is very close to the disk 120, the light generated by the reaction chambers 121, which is located right under the light incident surface 132a, only can be incident to the light incident surface 132a. Therefore, crosstalk, that is, mixing of light generated from different reaction chambers 121 and transferring the light to the photodetecting device 135, can be prevented. In addition, the intensity of light that is transferred to the photodetecting device 135 can increase.

In order to identify effects of the exemplary embodiment of the present invention, an experiment was performed. In the experiment, the number of rays incident to the photodetecting device 135 was measured when 1,000,000 rays were emitted from the reaction chambers 121, each having a diameter of 4.6 mm, at an angle of 89.9°. In particular, for comparison, the experiment was performed with respect to a case where the photodetecting device 135 directly faced the disk 120 (comparative example), and a case where the light transmitting element 132 was used (present exemplary embodiment). In the comparative example, the distance between the photodetecting device 135 and the disk 120 was 0.5 mm, and in the present exemplary embodiment, the distance between the light incident surface 132a of the light transmitting element 132 and the disk 120 was also 0.5 mm. In addition, the number of rays incident to the photodetecting device 135, among the rays emitted from two neighboring reaction chambers 121, were measured. The experiment results are shown in Table 1 as follows.

**[Table 1]**

| | Light receiving amount (the number of incident rays) | Crosstalk (the number of incident rays) | |
|---|---|---|---|
| | Distance between reaction chambers: 5 mm | Distance between reaction chambers: 5 mm | Distance between reaction chambers: 8 mm |
| Comparative Example | 457,220 | 144 | 0 |
| | 458,119 | 178 | 0 |
| | 457,179 | 163 | 0 |
| Present Embodiment | 547,658 | 0 | 0 |
| | 548,460 | 0 | 0 |
| | 548,880 | 0 | 0 |

As shown in Table 1 above, the intensity of the light incident on the photodetecting device 135 in the present exemplary embodiment was about 20% higher than that of the comparative example. In addition, when the distance between the reaction chambers 121 was 5 mm, crosstalk occurred in the comparative example; however, crosstalk did not occur in the present exemplary embodiment. Therefore, according to the exemplary embodiment of the present invention, the reaction chambers 121 can be arranged on the disk 120 at intervals that are smaller than that of the comparative example, and thus, the number of reaction chambers 121 arranged on the disk 120 can be increased.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. An analyzing apparatus (100) comprising:
a rotatable disk (120), in which a plurality of reaction chambers (121) where a sample is brought to be in contact with a reagent are formed;
a rotation driver (110) which rotates the disk (120); and
a photodetector unit (130) which detects light generated from the reaction chambers (121),
wherein the photodetector unit (130) comprises:
a photodetecting device (135) which receives the light to generate electrical signals; and
a light transmitting element (132) which receives the light generated from the reaction chambers (121) and transfers the received light to the photodetecting device (135).

2. The analyzing apparatus of claim 1, wherein the photodetecting device (135) is disposed to face a surface of the disk (120) in which the reaction chambers (121) are formed, and the light transmitting element (132) is disposed between the photodetecting device (135) and the disk (120).

3. The analyzing apparatus of claim 2, wherein the light transmitting element (132) is a transparent bar type optical device.

4. The analyzing apparatus of claim 3, wherein the light transmitting element (132) has a cylindrical shape.

5. The analyzing apparatus of claim 1, wherein the light transmitting element (132) comprises a light incident surface (132a) facing the disk and a light exiting surface (132b) facing the photodetecting device (135), and the light incident on the light incident surface travels in the light transmitting element through total internal reflection and is output through the light exiting surface.

6. The analyzing apparatus of claim 5, wherein at least one of the light incident surface (132a) and the light exiting surface (132b) of the light transmitting element is a planar surface.

7. The analyzing apparatus of claim 5, wherein the light incident surface (132a) of the light transmitting element has a convex lens shape.

8. The analyzing apparatus of claim 5, wherein the light exiting surface (132b) of the light transmitting element has a convex lens shape.

9. The analyzing apparatus of one of claims 5 to 8, further comprising an anti-reflection coating formed on at least one of the light incident surface (132a) and the light exiting surface (132b) of the light transmitting element.

10. The analyzing apparatus of one of claims 5 to 9, wherein the light transmitting element (132) is disposed such that the distance between the light incident surface (132a) of the light transmitting element (132) and the disk (120) is equal to or greater than the amount of tilt generated when the disk rotates.

11. The analyzing apparatus of one of claims 5 to 10, wherein the light transmitting element (132) is disposed such that a given distance exists between the light exiting surface (132b) of the light transmitting element (132) and a surface of the photodetecting device (135).

12. The analyzing apparatus of one of claims 2 to 4, wherein a cross-sectional shape of the light transmitting element (132) is the same as a cross-sectional shape of the photodetecting device (135).

13. The analyzing apparatus of one of claims 5 to 11, wherein the photodetector unit (130) further comprises a main body (131), on which the photodetecting device (135) is mounted, and the light transmitting element (132) is fixed on a surface of the main body (131).

14. The analyzing apparatus of claim 13, wherein the photodetector unit (130) further comprises:
a supporting member (133) surrounding the light transmitting element (132) to fix the light transmitting element (132) onto the surface of the main body (131).

15. The analyzing apparatus of claim 14, wherein the light incident surface (132a) of the light transmitting element (132) is located inside the supporting member (133) that surrounds the light transmitting element (132).
